# EUROPEAN PATENT SPECIFICATION

(11) **EP 3 745 042 B1**
(45) Date of publication and mention of the grant of the patent: **29.11.2023**
(21) Application number: 20177202.7
(22) Date of filing: 28.05.2020
(51) Int. Cl.: F24F 12/00, F24F 110/10, F24F 110/20, F24F 110/70, F24F 110/50, F24F 1/56

(54) **VENTILATION CLIMATE SYSTEM AND METHOD FOR CONTROLLING A VENTILATION CLIMATE SYSTEM**
LÜFTUNGSKLIMASYSTEM UND VERFAHREN ZUR STEUERUNG EINES LÜFTUNGSKLIMASYSTEMS
SYSTÈME DE CLIMATISATION À VENTILATION ET PROCÉDÉ DE COMMANDE D'UN SYSTÈME DE CLIMATISATION À VENTILATION

(30) Priority: 28.05.2019 NL 2023221; 04.06.2019 NL 2023256
(43) Date of publication of application: 02.12.2020
(73) Proprietor: Eco Climate Technologies B.V., 8561 CV Balk (NL)
(72) Inventor: Tulp, Cornelis Henderikus, 7841 GJ Sleen (NL)
(74) Representative: Arnold & Siedsma

(56) References cited:
- EP-A1- 2 244 023
- DE-A1- 4 412 844
- DE-C2- 4 412 844
- GB-A- 2 528 642
- US-A1- 2007 209 780
- US-A1- 2008 250 800

## Description

The present invention relates to a ventilation climate system for regulating a climate, such as indoor air temperature and/or humidity, of a room in a building and a method for controlling such a ventilation climate system.

Reducing the energy consumption is a vital part of society's current efforts of reducing the amount of greenhouse gasses, such as carbon dioxide (CO₂), that are emitted into the environment. Large numbers of scientific reports link the increase of greenhouse gas concentrations since the start of the industrial revolution with changes in the earth's climate, such as an increase in average temperatures. In order to be able to reduce this energy consumption, while maintaining our current standards of living, increases in efficiency of existing climate systems and a reduction of the use of fossil fuels is required.

In various countries, such as the Netherlands, natural gas is the most common method used for heating (residential) buildings. Heat is generated by burning gas, for instance, in a central heating unit that heats a liquid, such as water, that runs through a system of tubing to various hot water radiators for heating rooms inside. Although such a system is relatively simple and cheap to install, burning natural gas results in exhaust gasses comprising carbon dioxide. Alternatively, (electric) air heaters are used for distributing hot air throughout the building. A downside is that these consume vast amounts of electricity, which is currently still mainly produced by coal and/or gas fired power plants.

Savings can be achieved by increasing the insulation values of roofs, walls and windows, such that less energy is required for heating (residential) building, such as homes, although this alone does not suffice to achieve the energy saving targets set. Also, due to increased insulation and reduction of draft, many (residential) building need a mechanical ventilation system to maintain a healthy interior climate, wherein air pollution and/or carbon dioxide levels are maintained within acceptable limits. As, due to ventilation, energy is also lost with the ventilated air, heat recovery systems exist that transfer (for example in case the outside temperature is lower compared to the inside temperature) the heat from the air ventilated out of the building to the fresh air supplied into the building, whereby energy losses can further be reduced. These systems are however typically quite expensive, require an extensive network of tubing for managing the flows the fresh supply air and exhaust (return) air ventilated out.

Patent document DE 44 12 844 A1 relates to a unit for a single room having a cross-flow heat exchanger integrated with an electrical heat pump, with a condenser and an evaporator lying in the fresh air stream and the unconditioned air stream from the room respectively, behind the exchanger. The condenser has an additional electrical heat source. The housing of the whole unit hangs on the inside of an outside wall. The additional heat source is a thermal store which is charged up electrically. There is a bypass for the heat exchanger that conducts part of the fresh air stream directly to the evaporator of the heat pump.

It is a goal of the present invention, next to other goals, to provide an improved ventilation climate system for regulating a climate, such as the temperature and/or humidity, of a room in a building and a method for controlling such a ventilation climate system wherein at least one of the above mentioned problems is at least partially alleviated.

This goal, amongst other goals, is achieved by a ventilation climate system for regulating a climate in a room of a building, in particular a residential building, comprising:
- a return air system for guiding a flow of return air, comprising a return air inlet for taking in return air from the room, a return air outlet arranged outside of the room for expelling return air from the return air system;
- a supply air system for guiding a flow of supply air, comprising a supply air inlet for taking in supply air from outside the room, a supply air outlet for supplying supply air into the room;
- a heat exchange system arranged between the return and supply air systems for exchanging heat between the flow of return air and the flow of supply air;
- a temperature adjustment unit comprising a heat transfer member for adjusting the temperature, in particular heating and/or cooling, of the flow of supply air, wherein the heat transfer member is arranged in the supply air system between the supply air inlet and the supply air outlet and downstream of the heat exchange system.

Such a ventilation climate system is used for arranging the climate within a room while at the same time refreshing the air inside, such that an optimal and healthy living environment is obtained. Furthermore, due to the use of the heat exchange system, heat losses from ventilating are reduced, which leads to an increase in the efficiency and a reduction in the use of energy for controlling the interior climate. The fresh supply air is conditioned and delivered by the ventilation climate system, such that only a single type of infrastructure, namely tubing for guiding respectively the supply and return air, needs to be installed in a building. In traditional hot-water central heating systems, a separated ventilation system is required, thereby also increasing installation and operational costs.

Preferably, the supply air outlet is arranged for diffuse ventilation, such that supply air is supplied to the room at a slight overpressure with respect to the air pressure in the room and/or the supply air is supplied at lower air speeds than through the traditional air fresh air valves. Preferably, the supply air outlet thereby comprises an outlet-opening with a surface area that is larger than the cross-sectional surface area of air tubes comprised in the supply air system, which typically have a maximum diameter of 125mm for residential applications.

According to the invention, the temperature adjustment unit comprises a heat pump comprising an interior unit and an exterior unit, wherein heat transfer member comprises the interior unit. Heat energy naturally transfers from warmer places to colder spaces. However, a heat pump can reverse this process, by absorbing heat from a cold space and releasing it to a warmer one. Heat pumps are more efficient than traditional resistance heaters, or fossil fuel based heaters, because less high-grade energy (e.g. electricity, natural gas) is required than is released as heat. Most of the energy for heating comes from the external environment, only a fraction of which comes from, for instance, electricity. Hence, by providing the temperature adjustment unit with a heat pump, the ventilation climate system can be made more energy efficient. In particular, the exterior unit is arranged in thermal connection with the outside environment and/or air. Preferably, the exterior unit is arranged outside of the room, more preferably on the outside of the building. The interior unit is at least arranged to function as a condenser, to supply heat to the supply air, and the exterior unit is at least arranged to function as an evaporator to extract heat from the environment outside of the room or building.

The heat pump preferably further comprises a compressor for increasing a pressure of the refrigerant, such as R32 refrigerant, that flows through the condenser and an expansion valve for decreasing the pressure of the refrigerant that flows through the evaporator. Preferably, the heat pump further comprises a switching mechanism for reversing the operation of the heat pump, such that the same system can be used for respective heating and cooling of the supply air passing the heat transfer member. In particular, if the supply air is to be heated, the interior unit acts as the condenser and the exterior unit as the evaporator, and, if the supply air is to be cooled, the interior unit acts as the evaporator and the exterior unit as the condenser.

In a preferred embodiment, the heat transfer member, in particular the interior unit comprises a first refrigerant coil comprising a refrigerant, and wherein a second refrigerant coil comprising the refrigerant is arranged outside the room, in particular the exterior unit comprises the second refrigerant coil, wherein the first and second refrigerant coils are arranged as a condenser and/or evaporator. By arranging the first refrigerant coil in the heat transfer member, an efficient and direct transfer of heat from, or to, the flow of supply air is obtained. Thereby, allowing one to precisely condition the temperature and/or humidity of the supply air that is supplied to the room through the supply air outlet. Preferably, the refrigerant coils are arranged as direct expansion coils. Hereby, a separator, which often comprises a vessel that is used to separate gaseous and fluid refrigerant, is not required, such that a more compact heat pump system can be obtained.

In a preferred embodiment of the ventilation climate system, the return air outlet is coupled to the heat pump, in particular to the exterior unit of the heat pump. After passing through the heat exchanger system, the relative temperature difference between the return air and the outside air will have decreased, nonetheless a difference will typically remain. For example, in the winter, the temperature of the return air leaving the outlet will tend to be a bit higher when compared to the outside temperature. In addition, the return air will typically also have a higher relative humidity. It thus takes the heat pump less effort to extract heat from the return air, then from the outside air. Or in other words, to produce the same amount of heat, it would require simply less energy in case the heat pump is coupled to the return air outlet. The effect is reversed in the summer, when needing to cool the supply air. In that case the heat pump needs to transfer the heat to the outside air, whose temperature is higher compared to the inside temperature. As the temperature of the return air, after having passed the heat exchange system, is still a bit lower when compared to the outside air, it will take less effort for the heat pump to cool the supply air to the desired temperature. This effect can be further improved by arranging the return air system such that the flow of return air passes at least the exterior unit when flowing out for respectively ejecting at least a part of the heat into, or taking up at least a part of the heat from, the expelled return air.

According to the invention, the exterior unit is arranged inside, or is coupled to, an air mixing unit that is arranged for taking in air from the outside environment, in particular outside the room and/or building, wherein the return air outlet is coupled to the air mixing unit and wherein the air mixing unit is arranged for mixing the expelled return air and the air from outside the room. Note that the exterior unit is arranged for taking in air of the air mixing unit, such that at least part of the air from the air mixing unit passes the external unit when flowing towards the outside. In case the exterior unit requires a larger flow of air than the return air system provides at that moment, air from outside the room (or outdoor air) is taken in by the air mixing unit. Hereby, the energy efficiency of the heat pump process and thereby of the ventilation climate system is further increased. For this it is further preferred that the air mixing unit comprises at least one first opening for allowing air from outside the room (or outdoor air) into the mixing unit or to allow the flow of air from inside the air mixing unit to the outside. The air mixing unit preferably also comprises at least one second opening for expelling the flow of air having passed the exterior unit.

Preferably, the exterior unit further comprises a controllable mechanical ventilator that is arranged for adjusting the flow of air from the air mixing unit passing the exterior unit, in particular the second refrigerant coil. Hereby, a mostly self-regulating air mixing system is obtained. If the flow of return air is smaller then the flow of air passing the exterior unit, in particular the second refrigerant coil, the air mixing unit will be at an under-pressure, whereby outside air is automatically drawn in. If the flow of return air is larger then the flow of air passing one of the condenser and or evaporator, in particular the second refrigerant coil, the air mixing unit will be at an over-pressure, whereby the return air is automatically pushed out of the air mixing unit to the outside environment.

According to the invention, the air mixing unit is comprised in a roof mounted cover. Hereby, the air mixing unit can be arranged outside of the building, such that less indoor space is taken up by the ventilation climate system. The air mixing unit is formed as an air mixing chamber comprising at least a first air mixing chamber inlet that is connected to the return air outlet, a second air mixing chamber inlet that is arranged for taking in fresh outdoor air, and an air mixing chamber outlet for expelling mixed air from the air mixing chamber. An air mixing chamber is hereby a passive piece of equipment that does not require additional power. Such a roof mounted cover, can be arranged to be mounted to any type of roof, being a flat roof, gable roof, gambrel roof, butterfly roof, or any other roof.

The exterior unit is preferably mounted to the air mixing unit, preferably at the location of the air mixing outlet. Hereby, air from the air mixing unit will flow through the exterior unit to the outside, thereby allowing the exterior unit to respectively eject at least a part of the heat into, or take up at least a part of the heat from, the expelled return air, as has been described earlier.

In a preferred embodiment, the exterior unit is arranged inside of the roof mounted cover. Hereby, one is able to hide the exterior unit, which would otherwise be exposed on, for instance, the roof of the building. This is not only beneficial from an increased lifetime perspective of the exterior unit, as it is at least partly shielded from harsh outdoor conditions but also, as these units are often not very visually pleasing, improves the esthetics of the building.

In a preferred embodiment, the roof mounted cover comprises a main outlet opening and wherein the exterior unit is arranged between the air mixing chamber outlet and the main outlet opening such that air from the air mixing chamber is allowed to flow out of the air mixing chamber through the exterior unit and through the main outlet opening. As the exterior unit is arranged in the outflow path of the air originating from the air mixing unit, a bigger potential of the energy savings due to the use of return air, as described above, can be obtained.

It is then preferred that the main outlet opening comprises an air flow directing mechanism for directing the flow of air from the main outlet opening, preferably, at least slightly upwards with respect the roof mounted cover. The exterior unit can be provided with controllable fan for regulating the flow of air that flows through the exterior unit, in particular the refrigerant coil of the exterior unit, towards the outside. The flow of air itself, but also the fan, will generate noise, which can negatively affect people in the vicinity of the exterior unit. By direction the flow of air upwards, at least a portion of the sound will also be directed upwards. Thereby, people that are for instance on the street, parks or gardens nearby will have less nuisance from the exterior unit arranged inside the roof mounted cover. Nuisance of these types of, often roof-mounted, installations is a major concern in densely populated residential area's, thereby restricting the installation of these types of climate control installations that are working to reduce CO₂ emissions, which are thus needed to achieve certain environmental targets. Hence, such a roof mounted cover will greatly aid in the (social) acceptance of these types of climate systems and thereby in achieving environmental targets.

It is preferred that the air flow directing mechanism comprises a number of fins that are arranged at an angle with respect to the horizon, preferably at an angle of 15 to 75 degrees, more preferably at an angle of 30 to 60 degrees, most preferably around 45 degrees, to direct the air flow at least slightly upwards. Hereby, the flow of air is effectively and reliably directed upwards along with sound waves originating from the exterior unit. Furthermore, as the fins in the main outlet opening are directed at an angle upwards, as seen from inside to outside of the roof mounted cover, the exterior unit is also effectively taken out of sight of those on the street, parks or gardens, but also those in building of similar height across the street.

In a preferred embodiment, the roof mounted cover comprises a closable opening towards the inside of the building, in particular, the roof. Maintenance required to the exterior unit can hereby be safely performed from within the building, such that service personnel are often not required to service the exterior unit from the roof. The closable service opening can for instance be provided in a wall of the air mixing chamber. Preferably, the closable opening also comprises an insulation layer for ensuring proper insulation between the air mixing chamber and the inside of the building, in particular, the inside of the roof.

More generally, the goal, amongst other goals, is also met by a roof mounted, or mountable, cover as described. In particular, a roof mountable cover comprising an air mixing unit wherein the air mixing unit comprises an interior air mixing chamber that is arranged within the roof mountable cover, wherein the air mixing chamber comprises at least a first air mixing chamber inlet that is arranged for taking in ventilation exhaust air from a building, a second air mixing chamber inlet that is arranged for taking in fresh outdoor air, and an air mixing chamber outlet for expelling mixed air from the air mixing chamber, wherein, preferably, the air mixing unit further comprises a mounting section for mounting an exterior unit of a heat pump system and/or an air conditioning system at the location of the air mixing outlet.

The roof mountable cover can hereby be used for all types of building climate systems that employ such an exterior unit of a heat pump system and/or an air conditioning system. As has been described above, overall efficiency is improved using such a roof mountable cover comprising an air mixing unit. If the building's ventilation system, of which the outlet is to be mounted to the first air mixing chamber inlet, is not fitted with a heat exchange system for transferring thermal energy from, or to, the flow of supply air to, or from, the flow of return air, the increase in efficiency of the climate system is even more pronounced. For example, in the winter, the temperature of the return air leaving the outlet will tend to be a quite a bit higher when compared to the outside temperature. It thus takes the heat pump less effort to extract heat from the return air, then from the outside air. Or in other words, to produce the same amount of heat, it would require simply less energy in case the heat pump is coupled (for instance by means of the air mixing chamber) to the return air outlet. This mechanism is reversed in the summer, when needing to cool the supply air. In that case the heat pump and/or air conditioning system needs to transfer the heat to the outside air, whose temperature is higher compared to the inside temperature. As the temperature of the return air is quite a bit lower when compared to the outside air, it will take less effort for the heat pump and/or air conditioning to eject thermal energy to the relatively cooler air that flows through the air mixing chamber. The roof mountable cover can also be used as an upgrade to existing air-heat pump and/or air conditioning systems, as it requires limited installation work for improving the efficiency of an existing air-heat pump and/or air conditioning systems.

In a preferred embodiment of the ventilation climate system, it further comprises a measurement unit for measuring a temperature, relative humidity, CO₂ concentration, (indoor) air quality or a combination of any of these, preferably in the room, and a controller arranged for controlling the flow of return and/or supply air and/or the temperature adjustment of the supply air in dependence of the measurement taken by the measurement unit. Indoor air quality (IAQ) can be affected by gases, such as carbon monoxide, radon, volatile organic compounds (VOC), particulates, microbial contaminants (such as mold, bacteria, etc.), or any mass or energy stressor that can induce adverse health conditions. In a ventilation climate system that is arranged for controlling the interior climate of a room, or a building, and that aims for providing a comfortable and/or healthy interior climate, it is useful to measure at least some of the parameters that determine the quality of the interior climate. By controlling the ventilation climate system accordingly, the quality of the interior climate aimed for is obtainable by selectively controlling the different subsystems, such as the return air system, supply air system and temperature adjustment unit of the ventilation climate system, such that the entire system can be run efficiently and further energy savings are achieved.

It is further preferred that the measurement unit comprises a temperature and/or humidity sensor for measuring the temperature and/or humidity of the supply air at the supply air inlet, a temperature and/or humidity sensor for measuring a temperature and/or humidity of the room of the building, wherein the controller comprises temperature and/or humidity setpoint for the room and wherein the controller is arranged for controlling the flow of return and/or supply air and/or the temperature adjustment unit in dependence of at least the measured temperature and/or humidity of the room, the measured temperature and/or humidity of the supply air at the supply air inlet and the temperature and/or humidity setpoint. If, for instance, indoor temperature and humidity are measured and controlled parameters, the controller will also have to take the temperature adjustment of the supply air into account. In case a combination of the above noted parameters is measured and taken into account for controlling the interior climate, the controller is arranged to control the flow of return air, the flow of supply air and/or the temperature adjustment of the supply air is such a manner that a comfortable and healthy interior climate can obtained, with acceptable levels of CO₂ concentrations and/or indoor air quality, and a comfortable combination of temperature and humidity.

It is then preferred that the controller is arranged to determine one of the temperature setpoint and air humidity setpoint in dependence of the other of the temperature setpoint and air humidity setpoint. These comfortable combinations are for instance defined by the comfort zones as defined by EN15251, which are often provided on the Mollier diagram, which is a graphic representation of the relationship between air temperature, moisture content and enthalpy. Hence, the controller can, for instance, define an air humidity setpoint, which is a targeted air humidity in the interior climate of the room, based on the temperature setpoint. Hereby, the persons in the room (or building) only need to provide a temperature setpoint that is to their liking, and the controller is arranged to determine a suitable air humidity setpoint. These setpoints are then used by the controller for controlling the different subsystems, such as the return air system, supply air system and temperature adjustment unit of the ventilation climate system.

In a preferred embodiment, the measurement unit comprises a sensor for measuring a CO₂ concentration and/or air quality of the room of the building, wherein the controller is arranged for controlling the flow of return and/or supply air based on the measured CO₂ concentration and/or indoor air quality of the room. In case that CO₂ concentrations and/or air quality are parameters that are measured and taken into account by the controller for driving the ventilation system, it is for instance possible that, if CO₂ concentrations are too high and/or indoor air quality too low, which is for instance caused by large amounts of people being present in the room, the controller will increase the flow of return and/or supply air in order to respectively extract and/or dilute the unwanted gases affecting CO₂ concentrations and/or indoor air quality. At the same time, if no, or merely a few, people are present in the room, the flow of return and/or supply air can be decreased while maintaining the CO₂ concentrations and/or indoor air quality at acceptable levels, such that the ventilation climate system can be run very (energy) efficiently.

In a preferred embodiment, the system is arranged for keeping the room (and/or building) at an overpressure with respect to the environment outside of the room (and/or building). The overpressure first of all reduces the infiltration of unconditioned air through air gaps in the outer shell of the room and/or building. Secondly, the overpressure aids in the process of obtaining a homogeneous climate in the room, e.g. a climate with a substantially equal distribution of the temperature and/or humidity throughout the room. For instance, molecules comprised in air that is warmer with respect to the air held inside the room tend to move faster, as these faster molecules collide with the other molecules the kinetic energy is exchanged between molecules in the room. Heat conduction, also called diffusion resulting from Brownian motion of the molecules, is the direct microscopic exchange of kinetic energy of particles through the boundary between two systems. As, with an increase of pressure, the amount of molecules in the air increase, the occurrences of collision also increase, such that faster diffusion is obtained. Hereby, the climate ventilation system is able to obtain a substantial homogenies climate in a room, thus resulting in comfortable living conditions.

In a preferred embodiment of the ventilation climate system, the supply air system further comprises a bypass channel and a controllable bypass valve, wherein the bypass channel is arranged for creating a bypass-flow of supply air that passes around the heat exchange system and whereby the controllable bypass valve is arranged to be controlled by the controller for controlling an amount of supply air that flows through the bypass-channel. For instance, in the summer, morning temperatures in many European countries tend to be relatively low, the controller of the ventilation climate system could then be programmed to have the flow of cool supply air to bypass the heat exchange system, such that the temperature in the room, or building, is quickly lowered. Without the bypass, the heat exchange system would recover most of the heat from the return system, whereby further cooling would be required by the temperature adjustment unit, which requires the use of further energy. The controller could then also be arranged such that it allows the room temperature to be decreased to a point that is lower than the setpoint, such that later in the day, less active cooling (by the heat adjustment unit) is required to keep a comfortable, cool, climate in the room. Hereby, significant energy savings can be achieved in the summer.

It is preferred that the ventilation climate system further comprises an electric air heater that is arranged in the supply air system downstream of the temperature adjustment unit and wherein the controller is arranged to control the heat supplied to the supply air by the electric air heater. The electric air heater can be used for heating the supply air even further, if the heat exchange system and temperature adjustment unit are not able to reach the target supply air temperature. Furthermore, it can be used in combination with the cooling capabilities of the temperature adjustment unit to decrease the (absolute) humidity of the supply air. By first cooling the supply air up to a point that part of the humidity starts to condense, the absolute humidity of the supply air is decreased. Afterwards, the electric air heater can be used to increase the supply air temperature again. Hereby, the supply air temperature and (absolute and relative) humidity of the supply air can be regulated by a single ventilation climate system, such that the interior climate, in terms of temperature and humidity, can be accurately controlled in an optimum manner.

In a preferred embodiment, a return mechanical ventilation unit, such as a return mechanical ventilator, for driving the flow of return air is arranged downstream of the heat exchange system and/or wherein a supply mechanical ventilation unit, such as a supply mechanical ventilator, for driving the flow of supply air is arranged downstream of the heat exchange system. Mechanical ventilation units provide for an effective, simple and robust solution for controlling the different air flows. In combination with the air mixing unit, the power of the return mechanical ventilation unit can adjusted to ensure a predefined return flow even in case of a change of pressure at the return air outlet.

This goal, amongst other goals, is further achieved by a method for regulating a climate in a room of a building, in particular a residential building, by means of a ventilation climate system according to any of the preceding embodiments, wherein the method comprises the steps of:
- setting a temperature and/or humidity setpoint for the room in a controller of the ventilation climate system;
- measuring, by means of a sensor, a temperature and/or humidity in the room;
- controlling a flow of return air and/or supply air based on the temperature and/or humidity setpoint and the measured temperature and/or humidity in the room;
- controlling the temperature adjustment unit for adjusting the temperature of the supply air.

As has been noted before, by controlling the ventilation climate system accordingly, the quality of the interior climate aimed for is obtainable by selectively controlling the different subsystems, such as the return air system, supply air system and temperature adjustment unit of the ventilation climate system, such that the entire system can be run efficiently and energy savings are achieved.

In a preferred embodiment, the method further comprises the steps of:
- determining, based on predefined comfort settings that are defined as a relation between temperature and humidity and at least one of the predefined temperature and humidity setpoints, the other of the predefined temperature and humidity setpoints;
- comparing, using the controller, the measured temperature and humidity in the room with the predefined temperature and humidity setpoints;
- determining, based on the comparison, a target supply air temperature and/or humidity for the flow of supply air supplied through the supply air outlet;
- adjusting the flow of return air and/or the flow of supply air and the temperature adjustment of the supply air based on the target supply air temperature and/or humidity.

As has been noted before, the comfortable combinations are for instance defined by the comfort zones as defined by EN15251, which are often provided on the Mollier diagram, which is a graphic representation of the relationship between air temperature, moisture content and enthalpy. These setpoints are then used by the controller for controlling the different subsystems, such as the return air system, supply air system and temperature adjustment unit of the ventilation climate system, in an efficient manner.

In a preferred embodiment, the method comprises the steps of:
- measuring a temperature and/or humidity of the flow of supply air downstream of the heat exchanger system;
- determining a difference between the temperature and/or humidity of the flow of supply air downstream of the heat exchanger system and the target supply air temperature and/or humidity;
- adjusting the flow of return air and/or the flow of supply air and the temperature adjustment of the supply air based on the difference between the temperature and/or humidity of the flow of supply air downstream of the heat exchanger system and the target supply air temperature and/or humidity.

Hereby, an efficient method for regulating the interior climate is obtained, as has been mentioned before.

In a preferred embodiment, the method comprises the step of:
- controlling the bypass-valve for adjusting the bypass-flow of supply air that passes around the heat exchange system.

As has been noted above, for instance significant energy savings can be achieved in the summer.

Preferably, the method also comprises the steps of:
- Determining an indoor air quality by measuring volatile organic compounds (VOC) and/or CO₂ concentrations of the return air taken in by the return air inlet;
- Determining, using the controller, a minimum flow of return and/or supply air;
- Controlling the mechanical supply and/or return ventilation units for obtaining the minimum flow of return and/or supply air.

Hereby, the ventilation climate system is also able to ensure a healthy indoor air quality, as has also been noted above.

The present invention is further illustrated by the following figures, which show preferred embodiments of the ventilation climate system, and methods of controlling the ventilation climate system, according to the invention, and are not intended to limit the scope of the invention in any way, wherein:
Figure 1 shows schematically a perspective view of the interior of a house comprising an embodiment of the ventilation climate system.
Figure 2 schematically shows an embodiment of the ventilation climate system.
Figure 3 shows a cut-open 3D perspective of an embodiment of a roof mountable cover that is mounted to an inclined roof.
Figure 4 shows a cross-sectional side view of the embodiment of the roof mountable cover that is mounted to an inclined roof.

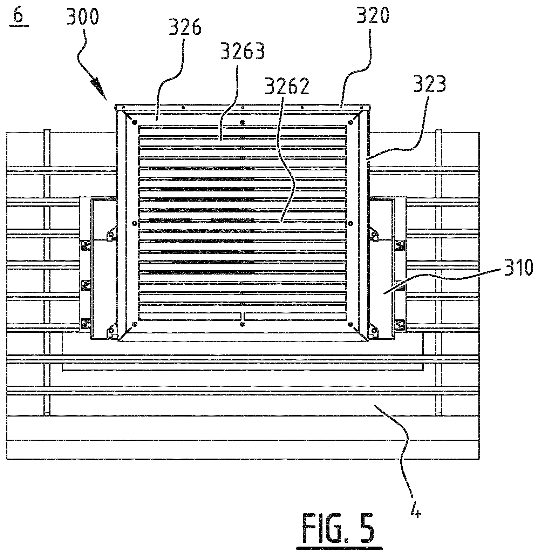

Figure 5 shows a front view of the embodiment of the roof mountable cover.
Figure 6 shows a side view of the embodiment of the roof mountable cover.

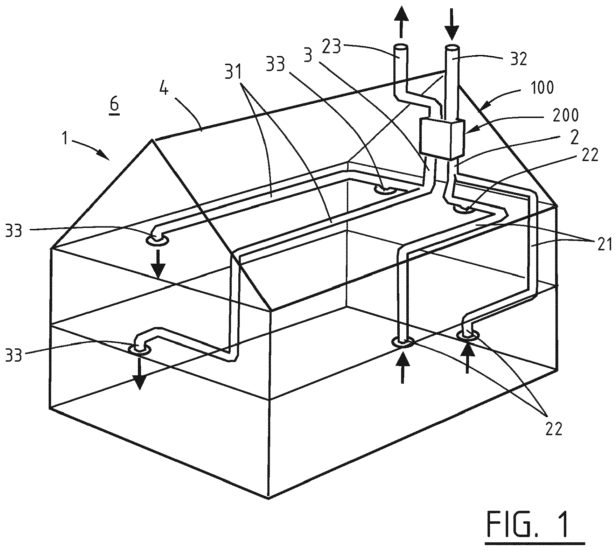

Figure 1 shows schematically a perspective view of the interior of a residential building, in particular a house 1, comprising an embodiment of the ventilation climate system 100. The house 1 comprises a number of different rooms, such as a kitchen, bathroom and toilet, and different living and/or sleeping quarters. In order to control the interior climate of the interior of the building 1, in particular of the different rooms, a ventilation climate system 100 is arranged.

The system 100 comprises a return air system, which comprises a return air collection system 2 that can comprise a number of return air tubes 21. At the ends, and/or along, the return air tubes 21 a number of return air inlets 22 can be arranged for taking in return air that is to be expelled from the building 1 into the outside environment 6. The ventilation climate system 100 can further comprise a supply air (distribution) system 3 that can comprise a number of supply air tubes 31 for distributing fresh supply air to a room, or multiple rooms, in the house 1, or building. For this purpose, the number of supply air tubes 31, fitted with one supply air outlet 33, or a number of supply air outlets 33, can be provided throughout the house 1. Return air inlets 22 are usually provided in the rooms wherein either pollutions, odours and/or high (levels of relative) humidity originates from, such as the kitchen, bathroom and toilet, whereas supply air outlets 33 are typically provided in the living/sleeping rooms and/or quarters, such that the flow of ventilation air inside the house 1 runs from the supply air outlets 33 to the return air inlets 22, thereby preventing the pollutions, odours and/or high humidity to distribute throughout the house 1, or building.

Return air that is taken in by the return air collection system 2 passes the central unit 200 before exiting through the return air outlet 23 that is often provided in a chimney arranged on the roof 4. Fresh supply air is taken in from the outside 6 at the supply air inlet 32, preferably at a location well separated from the return air outlet 23. After being taken in, the flow of fresh supply air passes the central unit 200, wherein the supply air can be conditioned, at least in terms of temperature and/or relative and/or absolute humidity, before being distributed throughout the housing by the supply air distribution system 3.

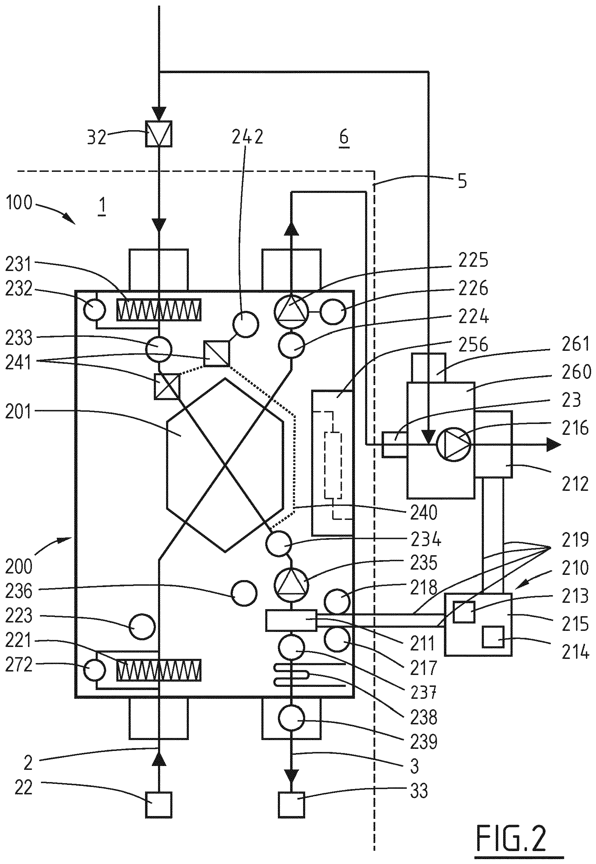

Figure 2 schematically shows an embodiment of the ventilation climate system 100, comprising controller 250 for controlling the different subsystems of the ventilation climate system 100. Dotted line 5 indicates a border between the interior of the house 1, and/or building, and the outside environment 6. Supply air system 3 and return air system 2 run through the central unit 200, wherein a heat exchange system 201 is arranged for exchanging heat between the flow of supply air in the supply air system 3 and the flow of return air in the return air system 2. Heat exchange system 201 can comprise a cross-flow heat exchanger that is made of thin metal panels, normally aluminium. The thermal energy is exchanged via the panels and the supply air and return air flows are kept completely separate from one another, such that no humidity, air pollution and or odours are exchanged from the return air flow to the supply air flow. Note however, that other types of heat exchanger can also be used in the heat exchange system 201.

Starting from the return air inlet 22, the flow of return air that runs through the return air system 2 can first pass a return air filter 221 for stopping any particles that are too large and could potentially damage or pollute any components arranged stream upwards. A return pressure-difference sensor 222 is arranged to measure a pressure drop over the return air filter 221. A high pressure drop could indicate that the filter 221 is clogged and that the filter 221 either needs changing or cleaning. By connecting pressure-difference sensor 222 to the controller 250, the controller 250 can indicate if service to return air filter 221 is required. Downstream of return air filter 221, a first return air sensor 223 can be arranged that is arranged for measuring a temperature, (relative) humidity and/or volatile organic compounds (VOC) of the return air taken in by the return air system 2. By linking sensor 223 to the controller 250, a feedback control loop for controlling the ventilation climate system 100 can be arranged.

After having passed the heat exchanger system 201, a temperature sensor 204 can be arranged that can be linked to the controller 250, such that a the temperature difference due to passing the heat exchanger system 201 can be determined. In order to generate and control the flow of return air, a mechanical ventilator 225, or simply a fan, is arranged, which is arranged alongside a return flow meter 226 for determining the actual flow of return air. Based on the determined flow, the controller 250 is arranged for regulating the power of the mechanical ventilator 225, such that a closed control loop is obtained for the flow of return air.

After having passed the mechanical fan 225, the return air is pushed towards the return air outlet 23 that can be coupled to an air mixing unit 260, such that the return air is expelled in the air mixing unit 260. The air mixing unit 260, which is also referred to as an air mixing chamber 260, is arranged for mixing the expelled return air originating from the return air system 2 and air from outside 6, that can enter the air mixing chamber 260 through at least a first opening 261 that acts as an outdoor air inlet. As has been noted earlier, air from inside the air mixing unit 260 can then flow through the second coil 212, which further increases the energy efficiency of the ventilation climate system 100. Second coil 221 can also fitted by a controllable mechanical ventilator 216 for forcing a flow of air from the mixing chamber 260 to pass the second coil 212 towards the outside environment 6.

Fresh supply air is taken in from the outside environment 6 by the supply air inlet 32, where after the flow of supply air that runs through the supply air system 3 can first pass a supply air filter 231 for stopping any particles that are too large and could potentially damage any components arranged stream upwards in the supply air system 2. A supply pressure-difference sensor 232 is arranged, similar to the arrangement on the return air system, to measure a pressure drop over the supply air filter 231. By connecting pressure-difference sensor 232 to the controller 250, the controller 250 can indicate if service to supply air filter 231 is required. Downstream of supply air filter 231, a first supply air sensor 233 can be arranged that is arranged for measuring a temperature and/or (relative) humidity of the fresh supply air taken in by the supply air system 2. By linking sensor 233 to the controller 250, a feedforward control loop for controlling the ventilation climate system 100 can be arranged, wherein the components downstream can be at least partly be controlled based on the temperature and/or (relative) humidity of the fresh supply air taken in.

Before the supply air arrives at the heat exchange system 201, it can be such that it first passes adjustable bypass-valve(s) 241 that can be adjusted by the bypass-actuator 242 that can be controlled by controller 250. The setting of the adjustable bypass-valve(s) 241 determines the percentage of the flow of supply air that bypasses the heat-exchange system 201 via bypass-channel 240. The bypass 240 enables, as has been noted before, to, for instance, quickly supply a large amount of cool air in the morning, in order to cost-effectively lower temperatures throughout the house 1.

A second supply air sensor 234 for measuring a temperature and/or humidity of the supply air, that can be coupled controller 250, can be arranged downstream of the heat exchange system 201 and the bypass-channel 240. Hereby, the temperature difference of the supply air can, for instance, be determined due to passing the heat exchanger system 201 by at least a part of the supply air. In order to generate and control the flow of supply air, a mechanical supply ventilator 235, or simply a fan, is arranged, which is arranged alongside a supply flow meter 236 for determining the actual flow of supply air. Based on the determined flow of supply air, the controller 250 is arranged for regulating the power of the mechanical supply ventilator 235, such that a closed control loop is obtained for the flow of supply air.

The ventilation climate system 100 further comprises the temperature adjustment unit. In the current embodiment, the temperature adjustment unit is provided downstream of the mechanical supply ventilator in the form a heat pump 210, comprising a first coil 211 and a second coil 212, a compressor 213 and expansion valve 214. The coils 211, 212 are preferably direct expansion coils, such that a separator would not be required by the heat pump 210. The first coil 211 is arranged downstream of the heat exchanger system 201, such that supply air can pass the heat exchanger system 201 before passing the first coil 211. First and second coils 211, 212 can be arranged to function as an evaporator and a condenser, or in other words as a heat source and a heat sink. In case the supply air needs to heated, the first coil 211 will act as an evaporator that releases thermal energy to the supply air, this thermal energy originates mostly from the second coil 212 that is arranged outside 6 of the room and/or house 1 and is arranged to act as an evaporator that extracts thermal energy from the outside environment 6. The compressor 213 and expansion valve 214 can be arranged in a separated housing 215, or be arranged with the first coil 211 or second coil 212. In case the supply air needs to be cooled, the operation of the heat pump 210 is reversed, whereby the first coils 211 acts as the evaporator and the second coil 212 acts as the condenser. Refrigerant temperature sensors 217, 218 can be applied to the supply lines 219 of the heat pump system for determining the temperature of the refrigerant, for instance R32 refrigerant, running in the supply lines 219. These values can, for instance, be used by the controller for determining a correct operation of the heat pump and/or the amount of thermal energy that is supplied to, or taken from, the flow of supply air passing the first coil 211.

A third supply air sensor 237 for measuring a temperature and/or humidity of the supply air, that can be coupled controller 250, can be provided downstream of the first coil 211. In case, based on for instance the measurements taken by the third supply air sensor 237, the controller 250 finds that the supply air requires further heating, an electrical heater 238 is supplied downstream of the third supply air sensor 237. A fourth supply air sensor 238 for measuring a temperature and/or humidity of the supply air that is directed to the supply air outlet(s) 33 can be provided and can, for instance, be used in a closed control loop of the controller 250 that is used to conditioning the supply air to the correct temperature and/or humidity.

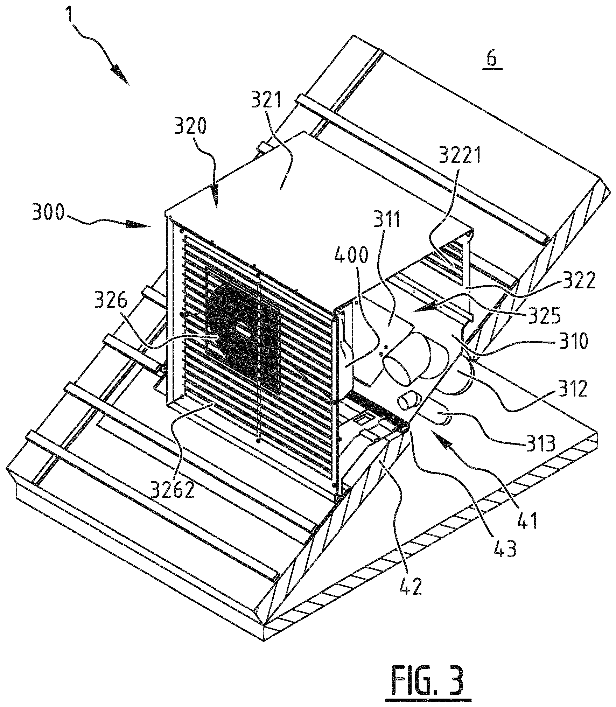

Figure 3 shows a cut-open 3D perspective of an embodiment of a roof mountable cover 300 that is mounted to an inclined roof 4 of a building, such as house 1. The roof mountable cover 300 can be arranged to (and/or through) a hole 41 of the roof 4, wherein a bottom portion 310 of the roof mountable cover 300 is mounted in the hole 41 and overlaps with a roof section 42 surrounding the hole 41. By covering the roof 4 and part of the bottom portion 310 with suitable roof covering material, such as roof tiles in the current example, a waterproof roof is obtained. The bottom portion 310 can, for instance, be mounted directly to roof 4 by means of connecting elements, such a bolts, screws, and/or the like, and/or can be mounted to the roof 4 by fixing it to a rim, or edge 42, of the hole 4, using, for instance, clamping members or similar suitable holding means.

The bottom portion 310 can comprise a closable, sealable, service opening that is closed of by a service hatch 311. The service opening allows for servicing the roof mountable cover 300 and the external unit 400 of the heat pump 210 and/or air conditioning system from inside the house 1, such that it can be serviced safely and in almost all weather conditions.

Bottom portion 310 can further comprise a first through tube 312 that can be connect the return air system outlet 32, such that the return air can be fed through the exterior unit 400 whereby the overall efficiency of the ventilation climate system, or any other climate system employing such a heat pump and/or air-conditioning, is further improved, as was described earlier. A second through tube 313 can be provided for guiding cables, such as sensor and/or power cables, and/or refrigerant supply lines 219 can be arranged from within the house 1 to the external unit 400 of the heat pump 210 and/or air-conditioning system. By means of the second through tube 313, the through hole with the cables and/or supply lines 219 can be sealed and/or insulated, such that thermal leaks in the roof are reduced or even fully prevented.

The external unit 400, which can comprise the second refrigerant coil 212 and mechanical ventilator 216 for regulating the flow of air from the air mixing unit 260 through the second refrigerant coil 212, can be mounted on the bottom portion 310, such that the external unit 400 is securely and/or durably fixed to the roof 4 by means of the bottom portion 310.

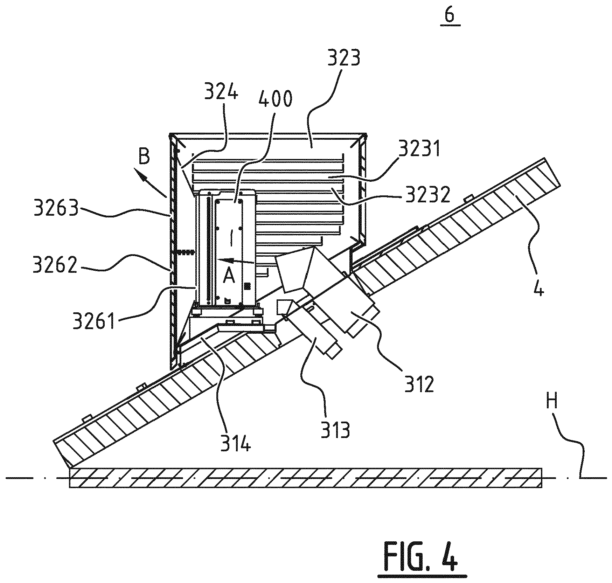

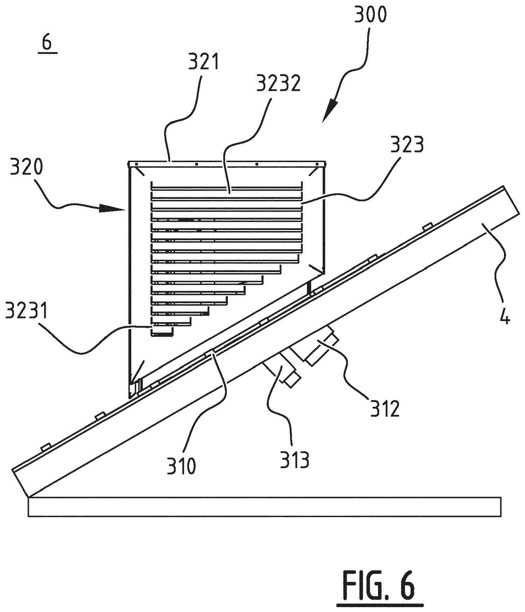

A top cover 320 is arranged onto the bottom portion 310. The top cover 320 can comprise a closed canopy section 321 for shielding the internals of the roof mountable cover 300 from the elements, such as rain, sunlight, snow, and the like, a back-panel 322, a front-panel 326 and two side panels 323 (also see figures 4 and 6). In figure 4 it is seen that an internal divider wall 324 is further comprised in the roof mountable cover 300. The inner surfaces of the bottom portion 310, the top cover 320, side panels 323 and internal divider wall 324 form the air mixing chamber 325 for mixing air from outside 6 with air expelled from the ventilation system, or the return air system 3, that enters through the first through tube 312. Openings in the side and/or back panels 322, 323 can be provided for drawing in outdoor air into the air mixing chamber 325, or for expelling excess return air from the air mixing chamber 325. The openings in the side and/or back panels 322, 323 can be formed as gratings 3221, 3231 formed, for instance, by a series of slats, or fins 3222, 3232 respectively arranged in the side and/or back panels 322, 323.

The divider wall 324 is arranged such that it comprises an opening 3261 that fits with the external unit 400, such that air is arranged to flow from the air mixing chamber 325 to the outside 6, as is indicated by arrow A. Air flowing through the external unit is then arranged to flow out through the front panel 326, that is arranged with openings. The openings in the front panel 326 can be formed as gratings 3262 formed, for instance, by a series of slats, or fins 3263 arranged in the front panel 326. These fins 3263 can be arranged at an upward angle with respect to horizontal H, such that air leaving the roof mountable cover 300 through the front panel 326 is directed slightly upwards, as indicated by arrow B. Hereby, the air, but also the sound originating from the flow of air and from the external unit 400, is arranged upwards, such that nuisance on the outside 6 from the climate system, and/or external unit 400, is reduced, aiding greatly in improving living conditions in densely populated (residential) area's.

Top cover 320 is preferably releasably mounted by means of suitable means, such any combination of for instance bolts, screws and shape-formed connectors, such that if a major overhaul is to be performed, top cover 320 can be removed from the bottom portion 310, enabling, for instance, the replacement of the exterior unit 400. Also, bottom portion 310 is preferably arranged with guiding means, such as gutter 314, for draining condensation water that is formed inside the roof mountable cover 300, such that corrosion of parts is reduced and/or potential water leaks through the roof 4 are also reduced, if not fully prevented.

Further, the disclosure comprises the following clauses:
Clause 1. Ventilation climate system for regulating a climate in a room of a building, in particular a residential building, comprising:
   - a return air system for guiding a flow of return air, comprising a return air inlet for taking in return air from the room, a return air outlet arranged outside of the room for expelling return air from the return air system;
   - a supply air system for guiding a flow of supply air, comprising a supply air inlet for taking in supply air from outside the room, a supply air outlet for supplying supply air into the room;
   - a heat exchange system arranged between the return and supply air systems for exchanging heat between the flow of return air and the flow of supply air;
   - a temperature adjustment unit comprising a heat transfer member for adjusting the temperature of the flow of supply air, wherein the heat transfer member is arranged in the supply air system between the supply air inlet and the supply air outlet and downstream of the heat exchange system.
Clause 2. Ventilation climate system according to clause 1, wherein the temperature adjustment unit comprises a heat pump comprising an interior unit and an exterior unit, wherein heat transfer member comprises the interior unit.
Clause 3. Ventilation climate system according to clauses 1 or 2, wherein the heat transfer member comprises a first refrigerant coil comprising a refrigerant, and wherein a second refrigerant coil comprising the refrigerant is arranged outside the room, wherein the first and second refrigerant coils are arranged as a condenser and/or evaporator.
Clause 4. Ventilation climate system according to clauses 2 or 3, wherein the return air outlet is coupled to the heat pump.
Clause 5. Ventilation climate system according to any of the preceding clauses 2-4, wherein the return air system is arranged such that the flow of return air passes the exterior unit for respectively ejecting at least a part of the heat into, or taking up at least a part of the heat from, the expelled return air.
Clause 6. Ventilation climate system according to any of the preceding clauses 4-5, wherein the exterior unit is arranged inside, or coupled to, an air mixing unit that is arranged for taking in air from outside the room, wherein the return air outlet is coupled to the air mixing unit and wherein the air mixing unit is arranged for mixing the expelled return air and the air from outside the room.
Clause 7. Ventilation climate system according to clause 6, wherein the air mixing unit is comprised in a roof mounted cover, wherein, preferably, the air mixing unit is formed as an air mixing chamber comprising at least a first air mixing chamber inlet that is connected to the return air outlet, a second air mixing chamber inlet that is arranged for taking in fresh outdoor air, and an air mixing chamber outlet for expelling mixed air from the air mixing chamber.
Clause 8. Ventilation climate system according to clause 6 or 7, wherein exterior unit is mounted to the air mixing unit, preferably at the location of the air mixing outlet.
Clause 9. Ventilation climate system according to clause 7 or 8, wherein the exterior unit is arranged inside of the roof mounted cover.
Clause 10. Ventilation climate system according to any of the preceding clauses 7-9, wherein the roof mounted cover comprises a main outlet opening and wherein the exterior unit is arranged between the air mixing chamber outlet and the main outlet opening such that air from the air mixing chamber is allowed to flow from the air mixing chamber through the exterior unit to the main outlet opening.
Clause 11. Ventilation climate system according to clause 10, wherein the main outlet opening comprises an air flow directing mechanism for directing the flow of air from the main outlet opening, preferably, at least slightly upwards with respect the roof mounted cover.
Clause 12. Ventilation climate system according to clause 11, wherein the air flow directing mechanism comprise a number of fins that are arranged at an angle with respect to a horizontal to direct the air flow at least slightly upwards.
Clause 13. Ventilation climate system according to any of the preceding clauses 7 - 12, wherein the roof mounted cover comprises a closable opening towards the inside of the building, in particular, the roof.
Clause 14. Ventilation climate system according to any of the preceding clauses, further comprising a measurement unit for measuring a temperature, relative humidity, CO₂ concentration, air quality or a combination of any of these, and a controller arranged for controlling the flow of return and/or supply air and/or the temperature adjustment of the supply air in dependence of the measurement taken by the measurement unit.
Clause 15. Ventilation climate system according to clause 14, wherein the measurement unit comprises a temperature and/or humidity sensor for measuring the temperature and/or humidity of the supply air at the supply air inlet, a temperature and/or humidity sensor for measuring a temperature and/or humidity of the room of the building,
   wherein the controller comprises temperature and/or humidity setpoint for the room and wherein the controller is arranged for controlling the flow of return and/or supply air and/or the temperature adjustment unit in dependence of at least the measured temperature and/or humidity of the room, the measured temperature and/or humidity of the supply air at the supply air inlet and the temperature and/or humidity setpoint.
Clause 16. Ventilation climate system according to clauses 15, wherein the controller is arranged to determine one of the temperature setpoint and air humidity setpoint in dependence of the other of the temperature setpoint and air humidity setpoint.
Clause 17. Ventilation climate system according to any of the preceding clauses 14 - 16, wherein the measurement unit comprises a sensor for measuring a CO₂ concentration and/or air quality of the room of the building, wherein the controller is arranged for controlling the flow of return and/or supply air based on the measured CO₂ concentration and/or air quality of the room.
Clause 18. Ventilation climate system according to any of the preceding clauses, wherein the system is arranged for keeping the room at an overpressure with respect to the environment outside of the building.
Clause 19. Ventilation climate system according to any of the preceding clauses, wherein the supply air system further comprises a bypass channel and a controllable bypass valve, wherein the bypass channel is arranged for creating a bypass-flow of supply air that passes around the heat exchange system and whereby the controllable bypass valve is arranged to be controlled by the controller for controlling an amount of supply air that flows through the bypass-channel.
Clause 20. Ventilation climate system according to any of the preceding clauses, further comprising an electric air heater that is arranged in the supply air system downstream of the temperature adjustment unit and wherein the controller is arranged to control the heat supplied to the supply air by the electric air heater.
Clause 21. Ventilation climate system according to any of the preceding clauses, wherein a return mechanical ventilation unit for driving the flow of return air is arranged downstream of the heat exchange system and/or wherein a supply mechanical ventilation unit for driving the flow of supply air is arranged downstream of the heat exchange system.
Clause 22. Method for regulating a climate in a room of a building, in particular a residential building, by means of a ventilation climate system according to any of the preceding clauses, wherein the method comprises the steps of:
   - setting a temperature and/or humidity setpoint for the room in a controller of the ventilation climate system;
   - measuring, by means of a sensor, a temperature and/or humidity in the room;
   - controlling a flow of return air and/or supply air based on the temperature and/or humidity setpoint and the measured temperature and/or humidity in the room;
   - controlling the temperature adjustment unit for adjusting the temperature of the supply air.
Clause 23. Method according to clause 22, further comprising the steps of:
   - determining, based on predefined comfort settings that are defined as a relation between temperature and humidity and at least one of the predefined temperature and humidity setpoints, the other of the predefined temperature and humidity setpoints;
   - comparing, using the controller, the measured temperature and humidity in the room with the predefined temperature and humidity setpoints;
   - determining, based on the comparison, a target supply air temperature and/or humidity for the flow of supply air supplied through the supply air outlet;
   - adjusting the flow of return air and/or the flow of supply air and the temperature adjustment of the supply air based on the target supply air temperature and/or humidity.
Clause 24. Method according to clause 22 or 23 further comprising the steps of:
   - measuring a temperature and/or humidity of the flow of supply air downstream of the heat exchanger system;
   - determining a difference between the temperature and/or humidity of the flow of supply air downstream of the heat exchanger system and the target supply air temperature and/or humidity;
   - adjusting the flow of return air and/or the flow of supply air and the temperature adjustment of the supply air based on the difference between the temperature and/or humidity of the flow of supply air downstream of the heat exchanger system and the target supply air temperature and/or humidity.
Clause 25. Method according to any of the preceding clauses 22 - 24, comprising the step of:
   - controlling the bypass-valve for adjusting the bypass-flow of supply air that passes around the heat exchange system.

The present invention is not limited to the embodiment shown, but extends also to other embodiments falling within the scope of the appended claims.

## Claims

1. Ventilation climate system (100) for regulating a climate in a room of a building, in particular a residential building, comprising:
- a return air system (2) for guiding a flow of return air, comprising a return air inlet (22) for taking in return air from the room, a return air outlet (23) arranged outside of the room for expelling return air from the return air system;
- a supply air system (3) for guiding a flow of supply air, comprising a supply air inlet (32) for taking in supply air from outside the room, a supply air outlet (33) for supplying supply air into the room;
- a heat exchange system (201) arranged between the return and supply air systems (2, 3) for exchanging heat between the flow of return air and the flow of supply air;
- a temperature adjustment unit comprising a heat transfer member for adjusting the temperature of the flow of supply air, wherein the heat transfer member is arranged in the supply air system (3) between the supply air inlet (32) and the supply air outlet (33) and downstream of the heat exchange system (201), wherein the temperature adjustment unit comprises a heat pump (210) comprising an interior unit and an exterior unit, wherein heat transfer member comprises the interior unit,
**characterized in that**
the exterior unit is arranged inside, or coupled to, an air mixing unit (260) that is arranged for taking in air from outside the room, wherein the return air outlet (23) is coupled to the air mixing unit (260) and wherein the air mixing unit (260) is arranged for mixing the expelled return air and the air from outside the room,
wherein the air mixing unit (260) is comprised in a roof mounted cover (300), wherein the air mixing unit (260) is formed as an air mixing chamber (260) comprising at least a first air mixing chamber inlet that is connected to the return air outlet (23), a second air mixing chamber inlet (261) that is arranged for taking in fresh outdoor air, and an air mixing chamber outlet for expelling mixed air from the air mixing chamber.

2. Ventilation climate system according to claim 1, wherein the return air outlet (23) is coupled to the heat pump (210), and/or wherein the return air system (2) is arranged such that the flow of return air passes the exterior unit for respectively ejecting at least a part of the heat into, or taking up at least a part of the heat from, the expelled return air.

3. Ventilation climate system according to claim 1 or 2, wherein the exterior unit further comprises a controllable mechanical ventilator (225) that is arranged for adjusting the flow of air from the air mixing unit (260) passing the exterior unit.

4. Ventilation climate system according to any of the preceding claims, wherein exterior unit is mounted to the air mixing unit (260), preferably at the location of the air mixing outlet.

5. Ventilation climate system according to any of the preceding claims, wherein the exterior unit is arranged inside of the roof mounted cover (300).

6. Ventilation climate system according to any of the preceding claims, wherein the roof mounted cover (300) comprises a main outlet opening and wherein the exterior unit is arranged between the air mixing chamber outlet and the main outlet opening such that air from the air mixing chamber (260) is allowed to flow from the air mixing chamber (260) through the exterior unit to the main outlet opening.

7. Ventilation climate system according to claim 6, wherein the main outlet opening comprises an air flow directing mechanism(3263) for directing the flow of air from the main outlet opening, preferably, at least slightly upwards with respect the roof mounted cover.

8. Ventilation climate system according to claim 7, wherein the air flow directing mechanism comprise a number of fins (3263) that are arranged at an angle with respect to a horizontal (H) to direct the air flow at least slightly upwards.

9. Ventilation climate system according to any of the preceding claims, wherein the roof mounted cover (300) comprises a closable opening (311) towards the inside of the building, in particular, the roof (4).

10. Ventilation climate system according to any of the preceding claims, further comprising a measurement unit for measuring a temperature, relative humidity, CO₂ concentration, air quality or a combination of any of these, and a controller (250) arranged for controlling the flow of return and/or supply air and/or the temperature adjustment of the supply air in dependence of the measurement taken by the measurement unit.

11. Ventilation climate system according to claim 10, wherein the measurement unit comprises a sensor for measuring a CO₂ concentration and/or air quality of the room of the building, wherein the controller (250) is arranged for controlling the flow of return and/or supply air based on the measured CO₂ concentration and/or air quality of the room.

12. Ventilation climate system according to any of the preceding claims, wherein the system is arranged for keeping the room at an overpressure with respect to the environment outside of the building.

13. Ventilation climate system according to any of the preceding claims, wherein the supply air system further comprises a bypass channel (240) and a controllable bypass valve (241), wherein the bypass channel (240) is arranged for creating a bypass-flow of supply air that passes around the heat exchange system (201) and whereby the controllable bypass valve (241) is arranged to be controlled by the controller (250) for controlling an amount of supply air that flows through the bypass-channel (240).

14. Method for regulating a climate in a room of a building, in particular a residential building, by means of a ventilation climate system (100) according to any of the preceding claims, wherein the method comprises the steps of:
- setting a temperature and/or humidity setpoint for the room in a controller (250) of the ventilation climate system (100);
- measuring, by means of a sensor, a temperature and/or humidity in the room;
- controlling a flow of return air and/or supply air based on the temperature and/or humidity setpoint and the measured temperature and/or humidity in the room;
- controlling the temperature adjustment unit for adjusting the temperature of the supply air.

## Patentansprüche

1. Lüftungs-Klimasystem (100) zum Regulieren des Klimas in einem Raum eines Gebäudes, insbesondere eines Wohngebäudes, aufweisend:
- ein Abluftsystem (2) zum Führen eines Abluftstroms, aufweisend einen Ablufteinlass (22) zum Ansaugen von Abluft aus dem Raum, einen außerhalb des Raumes angeordneten Abluftauslass (23) zum Ausstoßen von Abluft aus dem Abluftsystem;
- ein Zuluftsystem (3) zum Führen eines Zuluftstroms, aufweisend einen Zulufteinlass (32) zum Ansaugen von Zuluft von außerhalb des Raums und einen Zuluftauslass (33) zum Zuführen von Zuluft in den Raum;
- ein Wärmetauschersystem (201), das zwischen dem Abluft- und dem Zuluftsystem (2, 3) angeordnet ist, um Wärme zwischen dem Abluftstrom und dem Zuluftstrom auszutauschen;
- eine Temperatureinstelleinheit, aufweisend ein Wärmeübertragungselement zum Einstellen der Temperatur des Zuluftstroms, wobei das Wärmeübertragungselement in dem Zuluftsystem (3) zwischen dem Zulufteinlass (32) und dem Zuluftauslass (33) sowie stromabwärts des Wärmetauschersystems (201) angeordnet ist, wobei die Temperatureinstelleinheit eine Wärmepumpe (210) aufweist, mit einer Inneneinheit und einer Außeneinheit, wobei das Wärmeübertragungselement die Inneneinheit umfasst,
**dadurch gekennzeichnet, dass**
die Außeneinheit innerhalb einer zum Ansaugen von Luft von außerhalb des Raumes angeordneten Luftmischeinheit (260) angeordnet oder mit dieser gekoppelt ist, wobei der Abluftauslass (23) mit der Luftmischeinheit (260) gekoppelt ist, und wobei die Luftmischeinheit (260) zum Mischen der ausgestoßenen Abluft mit der Luft von außerhalb des Raumes angeordnet ist,
wobei die Luftmischeinheit (260) in einer dachmontierten Abdeckung (300) aufgenommen ist, wobei die Luftmischeinheit (260) als eine Luftmischkammer (260) ausgebildet ist, die zumindest einen mit dem Abluftauslass (23) verbundenen ersten Luftmischkammer-Einlass, einen zum Ansaugen von frischer Außenluft angeordneten zweiten Luftmischkammer-Einlass (261), und einen Luftmischkammer-Auslass, zum Ausstoßen von gemischter Luft aus der Luftmischkammer, aufweist.

2. Lüftungs-Klimasystem nach Anspruch 1, wobei der Abluftauslass (23) mit der Wärmepumpe (210) gekoppelt ist und/oder wobei das Abluftsystem (2) so angeordnet ist, dass der Abluftstrom die Außeneinheit durchströmt, um zumindest einen Teil der Wärme an die ausgestoßene Abluft abzugeben bzw. zumindest einen Teil der Wärme aus dieser zu entnehmen.

3. Lüftungs-Klimasystem nach Anspruch 1 oder 2, wobei die Außeneinheit ferner einen steuerbaren mechanischen Ventilator (225) aufweist, der zum Einstellen des die Außeneinheit durchströmenden Luftstroms der Luftmischeinheit (260) angeordnet ist.

4. Lüftungs-Klimasystem nach einem der vorherigen Ansprüche, wobei die Außeneinheit an der Luftmischeinheit (260), vorzugsweise an der Stelle des Luftmischeinheit-Auslasses, angebracht ist.

5. Lüftungs-Klimasystem nach einem der vorherigen Ansprüche, wobei die Außeneinheit im Inneren der dachmontierten Abdeckung (300) angeordnet ist.

6. Lüftungs-Klimasystem nach einem der vorherigen Ansprüche, wobei die dachmontierte Abdeckung (300) eine Hauptauslassöffnung aufweist und wobei die Außeneinheit zwischen dem Luftmischkammer-Auslass und der Hauptauslassöffnung angeordnet ist, so dass Luft der Luftmischkammer (260) von der Luftmischkammer (260) durch die Außeneinheit zur Hauptauslassöffnung strömen kann.

7. Lüftungs-Klimasystem nach Anspruch 6, wobei die Hauptauslassöffnung einen Luftstromleitmechanismus (3263) aufweist, um den Luftstrom in Bezug auf die dachmontierte Abdeckung von der Hauptauslassöffnung vorzugsweise zumindest leicht nach oben zu leiten.

8. Lüftungs-Klimasystem nach Anspruch 7, wobei der Luftstromleitmechanismus eine Anzahl von Rippen (3263) aufweist, die in Bezug auf eine Horizontale (H) in einem Winkel angeordnet sind, um den Luftstrom zumindest leicht nach oben zu leiten.

9. Lüftungs-Klimasystem nach einem der vorherigen Ansprüche, wobei die dachmontierte Abdeckung (300) eine verschließbare Öffnung (311) zum Gebäudeinneren, insbesondere zum Dach (4), aufweist.

10. Lüftungs-Klimasystem nach einem der vorherigen Ansprüche, ferner aufweisend eine Messeinheit zum Messen einer Temperatur, einer relativen Luftfeuchtigkeit, einer C02-Konzentration, einer Luftqualität oder einer Kombination davon, und einen Regler (250), der so angeordnet ist, dass er den Abluft- und/oder Zuluftstrom und/oder die Temperatureinstellung der Zuluft in Abhängigkeit der von der Messeinheit durchgeführten Messung steuert.

11. Lüftungsklimasystem nach Anspruch 10, wobei die Messeinheit einen Sensor zur Messung einer C02-Konzentration und/oder Luftqualität des Raums des Gebäudes umfasst, wobei der Regler (250) zur Steuerung des Ab- und/oder Zuluftstroms auf der Grundlage der gemessenen C02-Konzentration und/oder Luftqualität des Raums angeordnet ist.

12. Lüftungs-Klimasystem nach einem der vorherigen Ansprüche, wobei das System so angeordnet ist, dass es den Raum auf einem Überdruck in Bezug auf die Umgebung außerhalb des Gebäudes hält.

13. Lüftungs-Klimasystem nach einem der vorherigen Ansprüche, wobei das Zuluftsystem ferner einen Bypass-Kanal (240) sowie ein steuerbares Bypass-Ventil (241) aufweist, wobei der Bypass-Kanal (240) so angeordnet ist, dass er einen Bypass-Strom von Zuluft erzeugt, der um das Wärmetauschersystem (201) herum verläuft, und wobei das steuerbare Bypass-Ventil (241) so angeordnet ist, dass es von der Steuerung (250) gesteuert wird, um eine Menge an durch den Bypass-Kanal (240) strömende Zuluft zu steuern.

14. Verfahren zur Klima-Regelung in einem Raum eines Gebäudes, insbesondere eines Wohngebäudes, mittels eines Lüftungs-Klimasystems (100) nach einem der vorherigen Ansprüche, wobei das Verfahren die folgenden Schritte aufweist:
- Einstellen eines Temperatur- und/oder Luftfeuchtigkeits-Sollwerts für den Raum an einem Regler (250) des Lüftungs-Klimasystems (100);
- Messen der Temperatur und/oder Luftfeuchtigkeit in dem Raum mittels eines Sensors;
- Steuern eines Abluft- und/oder Zuluftstroms auf der Grundlage des Temperatur- und/oder Feuchtigkeits-Sollwerts und der gemessenen Temperatur und/oder Feuchtigkeit in dem Raum;
- Steuern der Temperatureinstelleinheit zum Einstellen der Temperatur der Zuluft.

## Revendications

1. Système climatique de ventilation (100) pour réguler un climat dans une pièce d'un bâtiment, notamment d'un bâtiment d'habitation, comprenant :
- un système d'air de retour (2) pour guider un flux d'air de retour, comprenant une entrée d'air de retour (22) pour aspirer l'air de retour de la pièce, une sortie d'air de retour (23) agencée à l'extérieur de la pièce pour expulser l'air de retour du système d'air de retour ;
- un système d'air fourni (3) pour guider un flux d'air fourni, comprenant une entrée d'air fourni (32) pour aspirer de l'air fourni depuis l'extérieur de la pièce, une sortie d'air fourni (33) pour introduire l'air fourni dans la pièce ;
- un système d'échange de chaleur (201) agencé entre les systèmes d'air de retour et d'air fourni (2, 3) pour un échange de chaleur entre le flux d'air de retour et le flux d'air fourni ;
- une unité de réglage de température comprenant un élément de transfert de chaleur pour régler la température du flux d'air fourni, dans lequel l'élément de transfert de chaleur est agencé dans le système d'air fourni (3) entre l'entrée d'air fourni (32) et la sortie d'air fourni (33) et en aval du système d'échange de chaleur (201), dans lequel l'unité de réglage de température comprend une pompe à chaleur (210) comprenant une unité intérieure et une unité extérieure, dans lequel l'élément de transfert de chaleur comprend l'unité intérieure,
**caractérisé en ce que**
l'unité extérieure est agencée à l'intérieur d'une unité de mélange d'air (260) ou couplée à celle-ci, qui est agencée pour aspirer de l'air de l'extérieur de la pièce, dans lequel la sortie d'air de retour (23) est couplée à l'unité de mélange d'air (260), et dans lequel l'unité de mélange d'air (260) est agencée pour mélanger l'air de retour expulsé et l'air provenant de l'extérieur de la pièce,
dans lequel l'unité de mélange d'air (260) est comprise dans un couvercle monté sur le toit (300), dans lequel l'unité de mélange d'air (260) est formée comme étant une chambre de mélange d'air (260) comprenant au moins une première entrée de chambre de mélange d'air qui est reliée à la sortie d'air de retour (23), une seconde entrée de chambre de mélange d'air (261) qui est agencée pour aspirer de l'air frais extérieur, et une sortie de chambre de mélange d'air pour expulser l'air mélangé de la chambre de mélange d'air.

2. Système climatique de ventilation selon la revendication 1, dans lequel la sortie d'air de retour (23) est couplée à la pompe à chaleur (210), et/ou dans lequel le système d'air de retour (2) est agencé de sorte que le flux d'air de retour traverse l'unité extérieure destinée respectivement à éjecter au moins une partie de la chaleur dans l'air de retour expulsé ou à en absorber au moins une partie.

3. Système climatique de ventilation selon la revendication 1 ou 2, dans lequel l'unité extérieure comprend en outre un ventilateur mécanique pouvant être commandé (225) qui est agencé pour régler le flux d'air provenant de l'unité de mélange d'air (260) traversant l'unité extérieure.

4. Système climatique de ventilation selon l'une quelconque des revendications précédentes, dans lequel l'unité extérieure est montée sur l'unité de mélange d'air (260), de préférence à l'emplacement de la sortie de mélange d'air.

5. Système climatique de ventilation selon l'une quelconque des revendications précédentes, dans lequel l'unité extérieure est agencée à l'intérieur du couvercle monté sur le toit (300).

6. Système climatique de ventilation selon l'une quelconque des revendications précédentes, dans lequel le couvercle monté sur le toit (300) comprend une ouverture de sortie principale et dans lequel l'unité extérieure est agencée entre la sortie de chambre de mélange d'air et l'ouverture de sortie principale de sorte que l'air de la chambre de mélange (260) puisse s'écouler de la chambre de mélange d'air (260) à travers l'unité extérieure jusqu'à l'ouverture de sortie principale.

7. Système climatique de ventilation selon la revendication 6, dans lequel l'ouverture de sortie principale comprend un mécanisme de direction de flux d'air (3263) pour diriger le flux d'air depuis l'ouverture de sortie principale, de préférence, au moins légèrement vers le haut par rapport au couvercle monté sur le toit.

8. Système climatique de ventilation selon la revendication 7, dans lequel le mécanisme de direction de flux d'air comprend un certain nombre d'ailettes (3263) qui sont agencées selon un angle par rapport à une horizontale (H) pour diriger le flux d'air au moins légèrement vers le haut.

9. Système climatique de ventilation selon l'une quelconque des revendications précédentes, dans lequel le couvercle monté sur le toit (300) comprend une ouverture pouvant être fermée (311) vers l'intérieur du bâtiment, en particulier le toit (4).

10. Système climatique de ventilation selon l'une quelconque des revendications précédentes, comprenant en outre une unité de mesure pour mesurer une température, une humidité relative, une concentration en CO₂, une qualité d'air ou une combinaison de plusieurs de ceux-ci, et un dispositif de commande (250) agencé pour commander le flux d'air de retour et/ou d'air fourni et/ou le réglage de température de l'air fourni en fonction de la mesure effectuée par l'unité de mesure.

11. Système climatique de ventilation selon la revendication 10, dans lequel l'unité de mesure comprend un capteur de mesure de la concentration en CO₂ et/ou de la qualité d'air de la pièce du bâtiment, dans lequel le dispositif de commande (250) est agencé pour commander le flux d'air de retour et/ou d'air fourni sur la base de la concentration en CO₂ et/ou de la qualité d'air de la pièce.

12. Système climatique de ventilation selon l'une quelconque des revendications précédentes, dans lequel le système est agencé pour maintenir la pièce en surpression par rapport à l'environnement externe au bâtiment.

13. Système climatique de ventilation selon l'une quelconque des revendications précédentes, dans lequel le système d'air fourni comprend en outre un canal de dérivation (240) et une vanne de dérivation pouvant être commandée (241), dans lequel le canal de dérivation (240) est agencé pour créer un flux de dérivation d'air fourni qui passe autour du système d'échange de chaleur (201) et grâce à quoi la vanne de dérivation pouvant être commandée (241) est agencée pour être commandée par le dispositif de commande (250) pour commander une quantité d'air fourni qui s'écoule à travers le canal de dérivation (240).

14. Procédé de régulation d'un climat dans une pièce d'un bâtiment, notamment d'un bâtiment d'habitation, au moyen d'un système climatique de ventilation (100) selon l'une quelconque des revendications précédentes, dans lequel le procédé comprend les étapes de :
- définition d'une consigne de température et/ou d'humidité pour la pièce dans un dispositif de commande (250) du système climatique de ventilation (100) ;
- mesure, au moyen d'un capteur, d'une température et/ou d'une humidité dans la pièce ;
- commande d'un flux d'air de retour et/ou d'air fourni sur la base de la consigne de température et/ou d'humidité et de la température et/ou humidité mesurée dans la pièce ;
- commande de l'unité de réglage de température pour régler la température de l'air fourni.
